(19) Europäisches Patentamt
European Patent Office
Office européen des brevets

(11) Publication number: **0 223 010 B1**

(12) # EUROPEAN PATENT SPECIFICATION

(45) Date of publication of patent specification: **23.10.91**

(51) Int. Cl.[5]: **C08F 10/00**, C08F 4/64, C08F 4/02

(21) Application number: **86112847.8**

(22) Date of filing: **13.08.81**

The file contains technical information submitted after the application was filed and not included in this specification

(60) Publication number of the earlier application in accordance with Art.76 EPC: **0 045 975**

(54) **Catalysts for the polymerization of olefins.**

(30) Priority: **13.08.80 IT 2414180**

(43) Date of publication of application:
**27.05.87 Bulletin 87/22**

(45) Publication of the grant of the patent:
**23.10.91 Bulletin 91/43**

(84) Designated Contracting States:
**AT BE CH DE FR GB IT LI NL SE**

(56) References cited:
**DE-A- 3 002 879**
**GB-A- 1 452 314**
**GB-A- 1 539 900**
**GB-A- 1 559 194**

**CHEMICAL ABSTRACTS, vol. 92, no. 2, 14 January 1980, Columbus, OH (US); p. 19, no. 7198d**

(73) Proprietor: **Montedison S.p.A.**
**31, Foro Buonaparte**
**I-20121 Milan(IT)**

(72) Inventor: **Parodi, Sandro**
**4, via dei Negri**
**Oleggio Novara(IT)**
Inventor: **Nocci, Roberto**
**170, corso XXIII Marzo**
**Novara(IT)**
Inventor: **Giannini, Umberto, Dr.**
**53, via Sismondi**
**Milano(IT)**
Inventor: **Barbe, Pier Camillo**
**3, via Pavone**
**Ferrara(IT)**
Inventor: **Scata, Umberto**
**31, via C. Battisti**
**Ferrara(IT)**

(74) Representative: **Kinzebach, Werner, Dr.**
**Patentanwälte Reitstötter, Kinzebach und Partner Sternwartstrasse 4 Postfach 86 06 49**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to catalysts for the polymerization of α-olefins.

The supported highly active and highly stereospecific catalysts up to now known for the polymerization of propylene and higher olefins, are obtained by the reaction of an Al-alkyl compound partially complexed with an electron donor compound (outside donor) with a solid component comprising a Ti compound and an electron-donor compound (inside donor) supported on a Mg-halide in active form.

Examples of such catalysts have been described in British Patent No. 1,559,194 and Belgian Patent No. 868,682.

The above supported catalysts need the use of an inside donor in order to obtain polymers having a high isotactic index. If the inside donor is omitted polymers having low isotactic index are obtained.

It has now unexpectedly been found that it is possible to obtain with high yield polymers of alpha olefins having a high isotactic index by using Ti-containing Mg dihalides-supported catalysts free from inside electron donor compounds obtained by a method comprising the reaction of a Ti-halide with an adduct of Mg dihalide with an alcohol, if an outside donor is used which is a silicon compound containing Si-OR, Si-OCOR or $Si\text{-}NR_2$ bonds.

The above results are surprising if one considers that catalysts are known which are prepared by using both as inside and outside donor a silicon compound containing Si-O-C bonds and which do not offer a performance in terms of activity and stereospecificity better than the one obtainable with catalysts in which an ester of benzoic acid is used as inside and outside donor.

The rather poor performance of the above prior art catalysts is due to the fact that the Si-containing inside donor is substantially removed from the Ti- containing supported component as result of the method of preparation of said component.

The catalysts of this invention are obtainable by reacting

a) an organoaluminium compound,

b) an electron-donor compound and

c) a solid component comprising a Ti-compound supported on a Mg-dihalide in active form,

whereby

a) the organo aluminium compound is an Al-trialkyl or an Al-alkyl compound containing 2 or more Al atoms linked together via an oxygen or nitrogen atom or via $SO_4$ or $SO_3$ groups;

b) the electron-donor compound is a silicon compound containing one or more $Si\text{-}OR^1$, $Si\text{-}OCOR^1$ or $Si\text{-}NR^1_2$ ($R^1$ being a hydrocarbyl radical); and

c) the solid component essentially consists of a Ti-compound which is obtainable by reaction of a Ti-halide with an adduct of a Mg-dihalide with an alcohol and which is supported on at least one anhydrous Mg dihalide in active form

wherein

the anhydrous Mg-dihalide in active form is

a Mg-dihalide showing in the X-ray powder spectrum of component c) a broadening of at least 30 % of the most intense diffraction line which appears in the powder spectrum of the corresponding dihalide having 1 $m^2/g$ of surface area or

a Mg-dihalide showing an X-ray powder spectrum in which said most intense diffraction line is replaced by a halo with the intensity peak shifted with respect to the interplanar distance of the most intense line, and/or

a Mg-dihalide having a surface area, measured after treatment of component c) with boiling $TiCl_4$ for 2 hours, greater than 3 $m^2/g$.

The found value in the measurement of the surface area of the Mg dihalides made on component c) after treatment with boiling $TiCl_4$ for 2 hours is considered as surface area for the Mg dihalide.

Very active forms of Mg dihalides are those showing a X-ray powder spectrum in which the most intense diffraction line appearing in the spectrum of the corresponding halide having 1 $m^2/g$ of surface area is decreased in relative intensity and broadened to form a halo or are those in which said most intense line is replaced by a halo having its intensity peak shifted with respect to the interplanar distance of the most intense line. Generally the surface area of the above forms is higher than 30-40 $m^2/g$ and is comprised in particular between 100-300 $m^2/g$.

Active forms are also those deriving from the above forms by heat-treatment in inert hydrocarbon solvents and showing in the X-ray spectrum sharp diffraction lines in place of the halos.

The sharp, most intense line of these forms shows a broadening of at least 30% with respect to the corresponding line of the Mg dihalide having 1 $m^2/g$ of surface area. Preferred Mg dihalides are Mg dichloride and Mg dibromide. The content in water of the dihalides is generally less than 1% by weight.

"Ti halides supported on the active Mg dihalide" means that the above compounds may be chemically or physically fixed on the support and are not extractable from component c) by treatment of the same with boiling 1,2-dichloroethane for 2 hours.

Components a), b) and c) may be reacted with each other in any order; preferably, however, components a) and b) are premixed before being contacted with component c).

The pre-mixing of a) and b) is conducted at temperatures comprised, usually, between room temperature and the temperature used in the polymerization process.

The pre-reaction of c) and b) may be carried out also at higher temperatures. Compound b) may be also incorporated and made to react with component c) itself. Component b) is made to react in a molar ratio with respect to the halogenated Ti compound supported on component c) of at least 1 and in a molar ratio with respect the Al-alkyl compound used as component a) of less than 20 and preferably comprised between 0.05 to 0.3.

In component c) the molar ratio between the Mg dihalide and the halogenated Ti compound supported thereon is comprised between 1 and 500 and the molar ratio between said halogenated Ti compound and the electron-donor supported on the Mg dihalide is comprised between 0.1 and 50. The silicon compounds set forth in b) include compounds of general formula:

$R_mSiY_nX_p$

wherein:

R is an alkyl, alkenyl, aryl, arylalkyl, cycloalkyl radical with from 1 to 20 carbon atoms;

Y is a -OR', -OCOR', $-NR_2'$ wherein R', either equal to or different from R, has the same meaning as R;

X is either a halogen or hydrogen atom or a -OCOR", $-NR_2"$ group wherein R", either equal to or different from R', has the same meaning as R';

m, n and p are numbers comprised respectively between: m between 0 and 3, n between 1 and 4 and p between 0 and 1; and m + n + p is equal to 4.

Other silicon compounds that may be used are compounds in which two or more silicon atoms are bound to each other through oxygen or nitrogen atoms.

Examples of these compounds are hexaethoxydisiloxane, symmetrical diphenyltetraethoxydisiloxane

$$(C_2H_5O)_2-\underset{C_6H_5}{Si}-O-CH_2-CH_2-O-\underset{C_6H_5}{Si}-(OC_2H_5)_2$$

Preferred silicon compounds are: phenylalkoxysilanes as phenyltriethoxy or trimethoxysilane, diphenyldimethoxy and diethoxysilane, monochlorophenyldiethoxysilane; alkylalkoxysilanes as ethyltriethoxysilane, ethyltriisopropoxysilane.

Examples of other suitable compounds are: chlorotriethoxysilane, acetoxytriethoxysilane, vinyltriethoxysilane, butyltriethoxysilane, triphenylmonoethoxysilane, phenyltricycloethoxysilane, phenyldiethoxydiethylaminosilane, tetraphenoxysilane or tetralkoxysilanes as tetramethoxysilane.

The silicon compound can also be formed.. in situ by reaction for instance of a halogenated silicon compound as $SiCl_4$ with an alcohol or an alcoholate of Mg or Al.

In the catalysts of the invention the silicon compound is present in a combined form in the solid product of the reaction between the various catalyst- forming components, in a molar ratio between the silicon compound and the halogenated Ti compound greater than 0.05 and generally comprised between 0.1 and 5.

The Al-alkyl compounds forming component a) includes Al-trialkyls as for instance Al-triethyl, Al-triisobutyl, Al-triisopropyl and compounds containing two or more Al atoms linked to each other through etero-atoms as:

$(C_2H_5)_2Al-O-Al(C_2H_5)_2$, 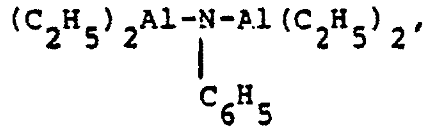

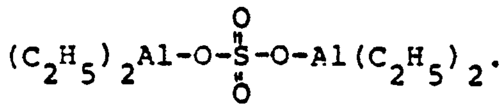

As indicated Al-alkyl compounds in which Al atoms are linked through groups as $SO_4$ or $SO_3$ are also suitable.

The Al-alkyl compounds may be used in mixture with Al-alkyl halides as $AlEt_2Cl$.

Component c) free from inside donors is prepared by methods comprising the reaction of an adduct between a Mg dihalide and an alcohol with $TiCl_4$.

The reactions are described in Belgian patent 868,682 and DE-A-3,022,738.

In the above method the final product contains a Mg dihalide, present in the active form as set forth here above.

Other known methods which lead to the formation of Mg dihalide in active form or to Ti- containing Mg dihalide supported components, in which the dihalide is present in active form, are based on the following reactions:

- reaction of a Grignard reagent or a Mg $R_2$ compound (R being a hydrocarbyl radical) or complexes of said Mg $R_2$ compounds with Al-trialkyls, with halogenating agents as $AlX_3$ or Al $R_mX_n$ compounds (X is halogen, R is a hydrocarbyl $m+n = 3$), $SiCl_4$ or $HSiCl_3$;
- reaction of a Grignard reagent with a silanol or polysiloxane, $H_2O$ or with an alcohol and further reaction with a halogenating agent or with $TiCl_4$;
- reaction of Mg with an alcohol and a hydrogen halide or of Mg with a hydrocarbyl halide and an alcohol;
- reaction of MgO with $Cl_2$ or $AlCl_3$;
- reaction of $MgX_2.nH_2O$ (X = halogen) with a halogenating agent or $TiCl_4$;
- reaction of Mg mono or dialcoholates or Mg carboxylates with a halogenating agent.

The Ti-halides include in particular the Ti-tetrahalides and Ti-trihalides. Preferred compounds are: $TiCl_4$ and $TiBr_4$.

The Ti-trihalides are obtained according to known methods, for instance by reduction of $TiCl_4$ with Al or a metallorganic Al compound or with hydrogen.

In case of the Ti-trihalides it may be convenient for the purpose of improving the performance of the catalysts to carry out an oxidization, even partial, of the titanium, either during or after the preparation of component c).

To this purpose there may be used halogens, iodine halides.

Component a) is preferably an Al-trialkyl, such as Al-triethyl or Al-triisobutyl.

The catalysts according to the invention are used to polymerize alpha-olefins $CH_2=CHR$ in which R is an alkyl radical with 1 to 4 carbon atoms or an aryl radical and mixtures of said olefins with ethylene. The polymerization is carried out according to known methods that is, in liquid phase, either in the presence or absence of an inert hydrocarbon solvent, or in gas phase or also by combining, for instance, a liquid phase polymerization step with a step in gas phase.

In general the temperature is comprised between 40° and 160°C, but preferably between 60° and 90°C, operating either at atmospheric or at greater than atmospheric pressure.

As a molecular weight regulator hydrogen or other regulators of a known type are used.

The catalysts are particularly suitable for polymerizing propylene, butene-1, styrene, 4-methylpentene. The catalysts may also be used according known methods to polymerize mixtures of propylene and ethylene to form modified polypropylenes having better shock-resistance at low temperatures (the so called block copolymers of propylene and ethylene) or to obtain random crystalline copolymers of propylene with minor proportions of ethylene.

The following examples are given for merely illustrative purpose and are not intended to be in any way limiting the scope of the invention.

EXAMPLE 1

Into an inox steel autoclave of 2000 ml holding capacity, equipped with a magnetical stirrer and a

thermometer, heat stabilized at 60 °C and kept under pressure by a nitrogen atmosphere, there were introduced 5 m moles of triethylaluminum, 1.5 m mols of phenyltriethoxysilane, the solid catalytic component obtained by reacting $TiCl_4$ with $MgCl_2$.2,3 $C_2H_5OH$, operating under the same conditions as described in Example 1 of Belgian Pat. No. 868,682 and 700 ml of degassed and anhydrous n-heptane, while propylene was also fed in. The catalytic component thus prepared showed a X-ray powder spectrum in which the most intense diffraction line appearing in the spectrum of $MgCl_2$ having 1 $m^2/g$ of surface area was decreased in relative intensity and broadened to form a halo.

Thereupon there was fed in 0.2 atm of hydrogen and then the whole was rapidly heated up to 70 °C, while contemporaneously additional propylene was fed in to reach a total pressure of 7 atm.

This latter pressure was maintained constant over the whole polymerization be feeding in the monomer. After 4 hours the polymerization was interrupted, the polymer was isolated by filtering and then was dried. The quantity of polymer dissolved in the filtrate was thereupon isolated, weighed and summed to the polymer soluble in boiling n-heptane, for the calculation of the isotacticity index.

The quantity of the catalytic component used and the content of Ti in said component, the yield in polymer with respect to the introduced Ti, the isotacticity index (I.I.) and the inherent viscosity determined in tetralin at 35 °C, are reported in Table I.

## Comparative EXAMPLE 1

Example 1 was repeated but using a solid catalytic component prepared as follows.

Anhydrous $MgCl_2$, phenyltriethoxysilane in molar ratio Mg/Si of 6, and $TiCl_4$ in molar ratio of 1:1 with respect to the phenyltriethoxysilane were co-milled in a vibrating mill of the type VIBRATOM manufactured by N.V. TEMA'S, Gravenhage (Holland), having a total volume of one liter and containing 3 kg of stainless steel balls of 16 mm diameter.

Grinding was effected employing a filling coefficient equal to 100 g/l of total volume (vacuum), at an interior temperature of the mill of 25 °C, and with a grinding time of 72 hours.

Charging of the mill with the materials to be ground, the grinding and discharging of the product from the mill occurred in a nitrogen atmosphere.

10 g of the co-ground product was contacted with 100 ml of 1,2-dichloroethane at 80 °C for 2 hours.

After this period, 1,2-dichloroethane was removed by filtration at 80 °C and the residual solid product was repeatedly washed with n-heptane at room temperature till the disappearance of the chloride ions from the filtrate and then was kept in suspension in heptane.

The catalytic components thus prepared showed a X-ray powder spectrum in which the most intense diffraction line appearing in the spectrum of $MgCl_2$ having 1 $m^2/g$ of surface area was decreased in relative intensity and broadened to form a halo.

The characteristics of the solid catalytic component, and the results of polymerization test have been reported in Table I.

## Comparative EXAMPLE 2

62 g of $MgCl_2$ and 12.5 g of $TiCl_4$ were introduced in the mill described in Comparative Example 1 and co-milled for 60 hours at room temperature. The content of Titanium was of 3.9% by weight.

10 g of the co-ground product were contacted with 100 ml of 1,2 dichloroethane at 80 °C for 2 hours.

The solid was separated by filtering and then was washed with heptane at said temperature until the disappearance of the chloride ions from the filtrate. The X-ray powder spectrum was similar to that of catalytic component of Example 1.

The solid catalytic component obtained was used in the polymerization of propylene under the same polymerization conditions described in Example 1.

The results of the polymerization have been reported in Table I.

## Comparative EXAMPLE 3

40 g of $MgCl_2$ was milled in the mill described in Comparative Example 1 for 200 hours at room temperature.

10 g of the ground product were treated with 150 ml of $TiCl_4$ for 2 hours at 135 °C. After hot filtering, the treatment with $TiCl_4$ was repeated. After washing with heptane at 80 °C and drying, the dry solid was used under the same polymerization conditions described in Example 1.

The solid catalytic component showed a X-ray powder spectrum similar to that of the catalytic

component of Example 1. The results of the polymerization have been reported in Table I.

Comparative EXAMPLE 4

200 mg of the solid catalytic component prepared according to Comparative Example 3 were used in the polymerization of propylene under the same conditions described in Example 1 but using ethyl p-toluate instead of PES. The result of the polymerization have been reported in Table I.

Comparative EXAMPLE 5

Comparative Example 4 was repeated but using the solid catalytic component prepared according to Comparative Example 2.

The results of the polymerization test have been recorded in Table I.

TABLE I

| Example No. | Solid catalytic component | | Polymerization | | | |
|---|---|---|---|---|---|---|
| | Ti content of solid component % by weight | Catalyst mg | $Al(C_2H_5)_3$ / donor (mols) | Yield g polymer / g catalyst component | I.I. % | $\eta$ inh dl/g |
| 1 | 2.5 | 46 | 3.33 | 7,000 | 80 | 1.3 |
| Comp. 1 | 3 | 40 | 10 | 6,300 | 95 | 1.0 |
| Comp. 2 | 1.3 | 55 | 5 | 2,700 | 86.6 | 1.1 |
| Comp. 3 | 0.5 | 200 | 3 | 1,000 | 83 | 1.0 |
| comp. 4 | 0.5 | 200 | 3.33 | 490 | 78 | 1.1 |
| comp. 5 | 1.3 | 73 | 3.33 | 650 | 77 | 1.4 |

## Claims

**Claims for the following Contracting States : BE, CH, DE, FR, GB, IT, LI, NL, SE**

**1.** Catalysts for the polymerization of alpha-olefins obtainable by reacting

a) an organoaluminium compound,
b) an electron-donor compound and
c) a solid component comprising a Ti-compound supported on a Mg-dihalide in active from,

**characterized in that**

a) the organo aluminium compound is an Al-trialkyl or an Al-alkyl compound containing 2 or more Al atoms linked together via an oxygen or nitrogen atom or via $SO_4$ or $SO_3$ groups;
b) the electron-donor compound is a silicon compound containing one or more $Si\text{-}OR^1$, $Si\text{-}OCOR^1$ or $Si\text{-}NR^1{}_2$ ($R^1$ being a hydrocarbyl radical); and
c) the solid component essentially consists of a Ti-compound which is obtainable by reaction of a Ti-halide with an adduct of a Mg-dihalide with an alcohol and which is supported on at least one anhydrous Mg dihalide in active form

wherein
the anhydrous Mg-dihalide in active form is

a Mg-dihalide showing in the X-ray powder spectrum of component c) a broadening of at least 30 % of the most intense diffraction line which appears in the powder spectrum of the corresponding dihalide having 1 $m^2/g$ of surface area or

a Mg-dihalide showing an X-ray powder spectrum in which said most intense diffraction line is replaced by a halo with the intensity peak shifted with respect to the interplanar distance of the most intense line, and/or

a Mg-dihalide having a surface area, measured after treatment of component c) with boiling $TiCl_4$ for 2 hours, greater than 3 $m^2/g$.

**2.** Catalysts as defined in claim 1, characterized in that the anhydrous Mg-dihalide of the solid component c) is Mg-dichloride or Mg-dibromide.

**3.** Catalysts as defined in claim 1 characterized in that the Ti-halide of the solid component c) is a Ti-tetrahalide.

**4.** Catalyst as defined in one of claims 1 to 3 characterized in that the surface area of the active Mg-dihalide is between 100 and 300 $m^2/g$.

**5.** The use of a solid component c) as defined in one of claims 1 to 4 for the preparation of a catalyst according to claim 1.

**6.** A process for the polymerization of alpha-olefins $CH_2=CHR$ in which R is an alkyl radical with 1 to 4 carbon atoms or an aryl radical and mixtures of said olefins with ethylene, characterized in that the polymerization process is carried out in liquid phase in presence or not of an inert hydrocarbon solvent or in gas phase by employing a catalyst as defined in one of claims 1 to 4.

**Claim for the following Contracting State : AT**

**1.** A process for preparing catalysts for the polymerization of alpha-olefins by reacting

a) an organoaluminium compound,
b) an electron-donor compound and
c) a solid component comprising a Ti-compound supported on a Mg-dihalide in active form,

**characterized in that**

a) the organo aluminium compound is an Al-trialkyl or an Al-alkyl compound containing 2 or more Al atoms linked together via an oxygen or nitrogen atom or via $SO_4$ or $SO_3$ groups;
b) the electron-donor compound is a silicon compound containing one or more $Si\text{-}OR^1$, $Si\text{-}OCOR^1$ or $Si\text{-}NR^1{}_2$ ($R^1$ being a hydrocarbyl radical); and
c) the solid component essentially consists of a Ti-compound which is obtainable by reaction of a Ti-halide with an adduct of a Mg-dihalide with an alcohol and which is supported on at least one anhydrous Mg dihalide in active form

wherein
the anhydrous Mg-dihalide in active form is

a Mg-dihalide showing in the X-ray powder spectrum of component c) a broadening of at least 30 % of the most intense diffraction line which appears in the powder spectrum of the corresponding dihalide having 1 $m^2/g$ of surface area or

a Mg-dihalide showing an X-ray powder spectrum in which said most intense diffraction line is replaced by a halo with the intensity peak shifted with respect to the interplanar distance of the most intense line, and/or

a Mg-dihalide having a surface area, measured after treatment of component c) with boiling $TiCl_4$ for 2 hours, greater than 3 $m^2/g$.

**2.** The process of claim 1, characterized in that the anhydrous Mg-dihalide of the solid component c) is Mg-dichloride or Mg-dibromide.

**3.** The process of claim 1 characterized in that the Ti-halide of the solid component c) is a Ti-tetrahalide.

**4.** The process of any one of claims 1 to 3 characterized in that the surface area of the active Mg-dihalide is between 100 and 300 $m^2/g$.

**5.** The use of a solid component c) as defined in one of claims 1 to 4 for the preparation of a catalyst according to claim 1.

**6.** A process for the polymerization of alpha-olefins $CH_2=CHR$ in which R is an alkyl radical with 1 to 4 carbon atoms or an aryl radical and mixtures of said olefins with ethylene, characterized in that the polymerization process is carried out in liquid phase in presence or not of an inert hydrocarbon solvent or in gas phase by employing a catalyst prepared according to one of claims 1 to 4.

**Revendications**
**Revendications pour les Etats contractants suivants : BE, CH, DE, FR, GB, IT, LI, NL, SE**

**1.** Catalyseurs pour la polymérisation d'alpha-oléfines pouvant être obtenus par réaction
a) d'un composé organoaluminique,
b) d'un composé donneur d'électrons et
c) d'un composant solide comprenant un composé du Ti supporté sur un dihalogénure de Mg sous forme active,
caractérisés en ce que
a) le composé organoaluminique est un Al-trialkyle ou un composé Al-alkyle contenant 2 atomes d'Al ou plus, liés ensemble par un atome d'oxygène ou d'azote ou par des groupes $SO_4$ ou $SO_3$;
b) le composé donneur d'électrons est un composé du silicium contenant un ou plusieurs groupes $Si\text{-}OR^1$, $Si\text{-}OCOR^1$ ou $Si\text{-}NR^1_2$ ($R^1$ étant un radical hydrocarbyle); et
c) le composant solide consiste essentiellement en un composé du Ti qui peut être préparé par réaction d'un halogénure de Ti avec un produit d'addition d'un dihalogénure de Mg et d'un alcool et qui est supporté sur au moins un dihalogénure de Mg anhydre sous forme active,
le dihalogénure de Mg anhydre sous forme active étant :
un dihalogénure de Mg présentant dans le spectre de poudre aux rayons X du composant c), un élargissement d'au moins 30% de la raie de diffraction la plus intense qui apparaît dans le spectre de poudre du dihalogénure correspondant ayant une aire superficielle de 1 $m^2/g$ ou
un dihalogénure de Mg présentant un spectre de poudre aux rayons X dans lequel cette raie de diffraction la plus intense est remplacée par un halo avec un pic d'intensité déplacé par rapport à la distance interplanaire de la raie la plus intense, et/ou
un dihalogénure de Mg ayant une aire superficielle, mesurée après traitement du composant c) avec du $TiCl_4$ à ébullition pendant 2 heures, supérieure à 3 $m^2/g$.

**2.** Catalyseurs suivant la revendication 1, caractérisés en ce que le dihalogénure de Mg anhydre du composant solide c) est un dichlorure de Mg ou un dibromure de Mg.

3. Catalyseurs suivant la revendication 1, caractérisés en ce que l'halogénure de Ti du composant solide c) est un tétrahalogénure de Ti.

4. Catalyseurs suivant l'une des revendications 1 à 3, caractérisés en ce que l'aire superficielle du dihalogénure de Mg actif est comprise entre 100 et 300 $m^2/g$.

5. L'utilisation d'un composant solide c) suivant l'une des revendications 1 à 4 pour la préparation d'un catalyseur suivant la revendication 1.

6. Un procédé pour la polymérisation d'alpha-oléfines de formule $CH_2=CHR$ dans laquelle R est un radical alkyle ayant 1 à 4 atomes de carbone ou un groupe aryle et de mélanges de ces oléfines avec de l'éthylène, caractérisé en ce que le procédé de polymérisation est effectué en phase liquide en présence ou non d'un solvant hydrocarboné inerte ou en phase gazeuse, avec un catalyseur tel que défini suivant l'une des revendications 1 à 4.

**Revendications pour l'Etat contractant suivant : AT**

1. Un procédé pour la préparation de catalyseurs pour la polymérisation d'alpha-oléfines par réaction
   a) d'un composé organoaluminique,
   b) d'un composé donneur d'électrons et
   c) d'un composant solide comprenant un composé du Ti supporté sur un dihalogénure de Mg sous forme active,

   caractérisé en ce que
   a) le composé organoaluminique est un Al-trialkyle ou un composé Al-alkyle contenant 2 atomes d'Al ou plus, liés ensemble par un atome d'oxygène ou d'azote ou par des groupes $SO_4$ ou $SO_3$;
   b) le composé donneur d'électrons est un composé du silicium contenant un ou plusieurs groupes $Si\text{-}OR^1$, $Si\text{-}OCOR^1$ ou $Si\text{-}NR^1_2$ ($R^1$ étant un radical hydrocarbyle); et
   c) le composant solide consiste essentiellement en un composé du Ti qui peut être préparé par réaction d'un halogénure de Ti avec un produit d'addition d'un dihalogénure de Mg et d'un alcool et qui est supporté sur au moins un dihalogénure de Mg anhydre sous forme active,

   le dihalogénure de Mg anhydre sous forme active étant:

   un dihalogénure de Mg présentant dans le spectre de poudre aux rayons X du composant c), un élargissement d'au moins 30% de la raie de diffraction la plus intense qui apparaît dans le spectre de poudre du dihalogénure correspondant ayant une aire superficielle de 1 $m^2/g$ ou

   un dihalogénure de Mg présentant un spectre de poudre aux rayons X dans lequel cette raie de diffraction la plus intense est remplacée par un halo avec un pic d'intensité déplacé par rapport à la distance interplanaire de la raie la plus intense, et/ou

   un dihalogénure de Mg ayant une aire superficielle, mesurée après traitement du composant c) avec du $TiCl_4$ à ébullition pendant 2 heures, supérieure à 3 $m^2/g$.

2. Le procédé suivant la revendication 1, caractérisé en ce que le dihalogénure de Mg anhydre du composant solide c) est un dichlorure de Mg ou un dibromure de Mg.

3. Le procédé suivant la revendication 1, caractérisé en ce que l'halogénure deTi du composant solide c) est un tétrahalogénure de Ti.

4. Le procédé suivant l'une des revendications 1 à 3, caractérisé en ce que l'aire superficielle du dihalogénure de Mg actif est comprise entre 100 et 300 $m^2/g$.

5. L'utilisation d'un composant solide c) tel que défini dans l'une des revendications 1 à 4 pour la préparation d'un catalyseur suivant la revendication 1.

6. Un procédé pour la polymérisation d'alpha-oléfines de formule $CH_2=CHR$ dans laquelle R est un radical alkyle ayant 1 à 4 atomes de carbone ou un groupe aryle et de mélanges de ces oléfines avec de l'éthylène, caractérisé en ce que le procédé de polymérisation est effectué en phase liquide en présence ou non d'un solvant hydrocarboné inerte ou en phase gazeuse, avec un catalyseur préparé suivant l'une des revendications 1 à 4.

## Patentansprüche

## Patentansprüche für folgende Vertragstaaten : BE, CH, DE, FR, GB, IT, LI, NL, SE

1. Katalysatoren zur Polymerisation von α-Olefinen, erhältlich durch Umsetzung

   a) einer Organoaluminiumverbindung,
   b) einer Elektronendonatorverbindung und
   c) einer festen Komponente umfassend eine Ti-Verbindung auf einem Mg-Dihalogenid in aktiver Form als Träger,

   **dadurch gekennzeichnet, daß**

   a) die Organoaluminiumverbindung eine Al-Trialkyl- oder eine Al-Alkyl-Verbindung ist und 2 oder mehr Al-Atome umfaßt, die über ein Sauerstoff- oder ein Stickstoffatom oder über $SO_4$ oder $SO_3$ Gruppen verbunden sind;
   b) die Elektronendonatorverbindung eine Siliziumverbindung mit einer oder mehreren Si-$OR^1$, Si-$OCOR^1$ oder Si-$NR^1{}_2$-Gruppen (wobei $R^1$ für einen Hydrocarbylrest steht) ist; und
   c) die feste Komponente im wesentlichen aus einer Ti-Verbindung besteht, die erhältlich ist durch Umsetzung eines TiHalogenids mit einem Addukt aus einem Mg-Dihalogenid und einem Alkohol und die sich auf wenigstens einem wasserfreien Mg-Dihalogenid in aktiver Form als Träger befindet,

   wobei
   das wasserfreie Mg-Dihalogenid in aktiver Form

   ein Mg-Dihalogenid ist, welches in einem Röntgen-Pulverspektrum der Komponente c) eine Verbreiterung von mindestens 30 % für die intensivste Beugungslinie zeigt, welche in einem Pulverspektrum des entsprechenden Dihalogenids mit einer Oberfläche von 1 $m^2/g$ zu finden ist, oder

   ein Mg-Dihalogenid ist, das ein Röntgen-Pulverspektrum zeigt, in dem die obengenannnte intensivste Beugungslinie durch ein Halo mit einem Intensitätspeak ersetzt ist, der in bezug auf den interplanaren Abstand der intensivsten Linie, verschoben ist, und/oder

   ein Mg-Dihalogenid ist, das eine Oberfläche größer als 3 $m^2/g$ aufweist, bestimmt nach einer 2-stündigen Behandlung der Komponente c) mit siedendem $TiCl_4$.

2. Katalysatoren nach Anspruch 1, dadurch gekennzeichnet, daß das wasserfreie Mg-Dihalogenid der festen Komponente c) Mg-Dichlorid oder Mg-Dibromid ist.

3. Katalysatoren nach Anspruch 1, dadurch gekennzeichnet, daß das Ti-Halogenid der festen Komponente c) ein Ti-Tetrahalogenid ist.

4. Katalysatoren nach einem der Ansprüche 1 bis 3, dadurch gekennzeichnet, daß die Oberfläche des aktiven Mg-Dihalogenids zwischen 100 und 300 $m^2/g$ liegt.

5. Verwendung einer festen Komponente c) nach einem der Ansprüche 1 bis 4 zur Herstellung eines Katalysators nach Anspruch 1.

6. Verfahren zur Polymerisation von α-Olefinen $CH_2=CHR$, wobei R für einen Alkylrest mit 1 bis 4 Kohlenstoffatomen oder einen Arylrest steht, und von Mischungen der Olefine mit Ethylen, dadurch gekennzeichnet, daß das Polymerisationsverfahren in flüssiger Phase, gegebenenfalls in Anwesenheit eines inerten Kohlenwasserstoff-Lösungsmittels, oder in der Gasphase unter Verwendung eines Katalysators nach einem der Ansprüche 1 bis 4 durchgeführt wird.

## Patentansprüche für folgenden Vertragsstaat : AT

1. Verfahren zur Herstellung von Katalysatoren zur Polymerisation von α-Olefinen, erhältlich durch Umsetzung

   a) einer Organoaluminiumverbindung,
   b) einer Elektronendonatorverbindung und

c) einer festen Komponente umfassend eine Ti-Verbindung auf einem Mg-Dihalogenid in aktiver Form, als Träger,

**dadurch gekennzeichnet, daß**

a) die Organoaluminiumverbindung eine Al-Trialkyl- oder eine Al-Alkyl-Verbindung ist und 2 oder mehr Al-Atome umfaßt, die über ein Sauerstoff- oder ein Stickstoffatom oder über $SO_4$ oder $SO_3$ Gruppen verbunden sind;

b) die Elektronendonatorverbindung eine Siliziumverbindung mit einer oder mehreren Si-$OR^1$, Si-$OCOR^1$ oder Si-$NR^1_2$-Gruppen (wobei $R^1$ für einen Hydrocarbylrest steht) ist; und

c) die feste Komponente im wesentlichen aus einer Ti-Verbindung besteht, die erhältlich ist durch Umsetzung eines Ti-Halogenids mit einem Addukt aus einem Mg-Dihalogenid und einem Alkohol und die sich auf wenigstens einem wasserfreien Mg-Dihalogenid in aktiver Form als Träger befindet,

wobei

das wasserfreie Mg-Dihalogenid in aktiver Form

ein Mg-Dihalogenid ist, welches in einem Röntgen-Pulverspektrum der Komponente c) eine Verbreiterung von mindestens 30 % für die intensivsten Beugungslinie zeigt, welche in einem Pulverspektrum des entsprechenden Dihalogenids mit einer Oberfläche von 1 $m^2/g$ zu finden ist, oder

ein Mg-Dihalogenid ist, das ein Röntgen-Pulverspektrum zeigt, in dem die obengenannnte intensivste Beugungslinie durch ein Halo mit einem Intensitätspeak ersetzt ist, der in bezug auf den interplanaren Abstand der intensivsten Linie, verschoben ist, und/oder

ein Mg-Dihalogenid ist, das eine Oberfläche größer als 3 $m^2/g$ aufweist, bestimmt nach einer 2-stündigen Behandlung der Komponente c) mit siedendem $TiCl_4$.

2. Verfahren nach Anspruch 1, dadurch gekennzeichnet, daß das wasserfreie Mg-Dihalogenid der festen Komponente c) Mg-Dichlorid oder Mg-Dibromid ist.

3. Verfahren nach Anspruch 1, dadurch gekennzeichnet, daß das Ti-Halogenid der festen Komponente c) ein Ti-Tetrahalogenid ist.

4. Verfahren nach einem der Ansprüche 1 bis 3, dadurch gekennzeichnet, daß die Oberfläche des aktiven Mg-Dihalogenids zwischen 100 und 300 $m^2/g$ liegt.

5. Verwendung einer festen Komponente c) nach einem der Ansprüche 1 bis 4 zur Herstellung eines Katalysators nach Anspruch 1.

6. Verfahren zur Polymerisation von $\alpha$-Olefinen $CH_2=CHR$, wobei R für einen Alkylrest mit 1 bis 4 Kohlenstoffatomen oder einen Arylrest steht, und von Mischungen der Olefine mit Ethylen, dadurch gekennzeichnet, daß das Polymerisationsverfahren in flüssiger Phase, gegebenenfalls in Anwesenheit eines inerten Kohlenwasserstoff-Lösungsmittels, oder in der Gasphase unter Verwendung eines Katalysators nach einem der Ansprüche 1 bis 4 durchgeführt wird.